# EUROPEAN PATENT APPLICATION

(11) **EP 1 118 264 A2**
(43) Date of publication of application: **25.07.2001**
(21) Application number: 01890014.2
(22) Date of filing: 18.01.2001
(51) Int. Cl.: A01G 5/04

(54) **Method of forming foam product with cut flower food incorporated therein**

(30) Priority: 18.01.2000 US 484589
(71) Applicant: Floralife, Inc., Walterboro, South Carolina 29488 (US)
(72) Inventor: Pius, Silvester, Summerville, South Carolina 29483 (US)
(74) Representative: Laminger, Norbert, Mag.

(57) **Abstract**

An open cell foam matenal with cut flower food admixed therein is provided wherein the cut flower food, preferably containing a sugar, is mixed with a resin for the foam matenal prior to foaming of the resin. A method of producing such a foam product includes mixing of the cut flower food with the resin, then sequentially mixing in a surfactant, a blowing agent and a catalyst. Cut flowers can be displayed, and their freshness prolonged by selecting a foam block containing cut flower food therein, placing the foam block in a water impervious container, inserting the sterns of the cut flowers into the foam block and adding water to the container.

## Description

### BACKGROUND OF THE INVENTION

The present invention relates to floral foam products and more particularly to foam flower holders.

Foam products have been used for the display of fresh cut flowers wherein the foam is a type of open cell foam, such as a phenolic based, chermoset foam. This type of foam allows the flower stems to be pressed into the foam which retains its rigidity to hold the flower stems in an upright position.

Due to the open cell nature of the foam, the foam is able to absorb and hold water or other liquid and to present that water to the stems of the fresh cut flowers in order to extend the fresh appearance of floral displays held in the foam

In order to maximize the fresh appearance of cut flowers, it is known that simply providing water is not sufficient, but rather some type of a cut flower food should be provided to the cut flower. In the past, the standard procedure has been to mix a quantity of powdered cut flower food with water to form a solution, with the solution then being provided to the container with the foam carried therein. However, this requires the user to properly mix a correct amount of the cut flower food with a correct amount of water in order to achieve a solution with the correct concentration of cut flower food therein. Such a procedure provides mixed results, is time consuming and can be messy.

### SUMMARY OF THE INVENTION

It is an object of the present invention to provide an improved floral foam product in which the cut flower food is incorporated into the foam product so that a user need only add water and no separate mixing of a solution is required.

It is a further object of the present invention to provide a method for forming a foam product with cut flower food incorporated therein.

These and other objects of the invention, as well as the advantages over existing and pnor art methods and foam products, which will be apparent in view of the following detailed specification, are accornplished in accordance with the following description and claims.

The present invention provides a method wherein a phenol formaldehyde resin is placed into a reaction vessel, an amount of sugar is added to the resin vessel, a surfactant is added with these materials all being mixed, a blowing agent is added to the mixture and mixed and then a catalyst is added and mixed in. Once all of these materials are completely mixed, the mixture is poured into a mold where it will rise and cure with the cut flower food incorporated into the foam

The resulting product is an open cell foam block, which can be cut to any particular shape and size as desired, and which incorporates the cut flower food therein. As water is added to a container holding the foam, the water will dissolve the cut flower food allowing it then to be absorbed by the plants through their cut stems.

### BRIEF DESCRIPTION OF THE PRAWINGS

FIG. I is a flow chart diagram llustrating the steps of the present invention.

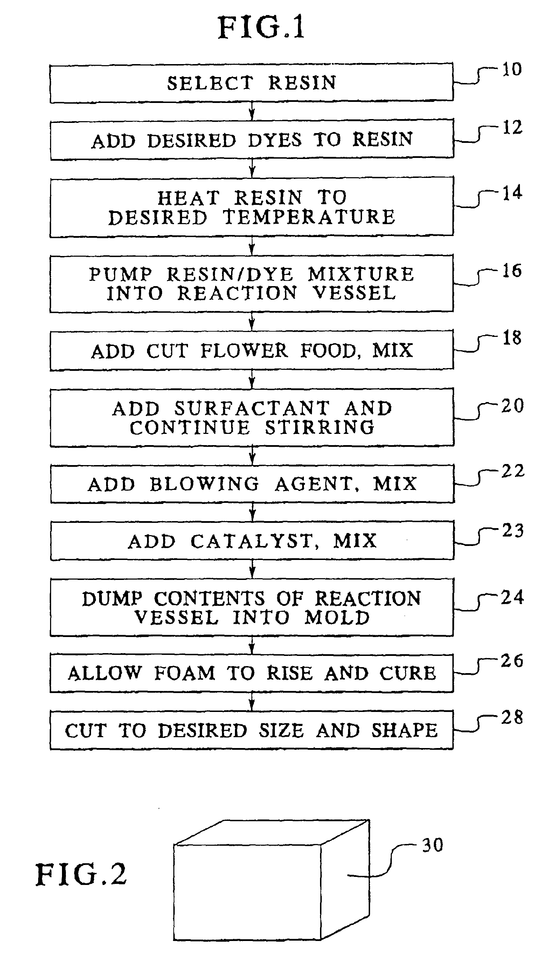

FIG. 2 is a schematic illustration of a block of foam incorporating cut flower food in accordance with the principles of the present invention.

### DETAILED DESCRIPTION OF THE PREFERRED EMBODIMENTS

The method of the present invention begins with the selection of a resin material to produce the desired foam product. The resulting foam product should be an open-celled foam structure which preferably is a phenolic foam which would require starting with a phenol formaldehyde resin.

As indicated in the flow chart of FIG. 1, in step 10 the desired resin is selected. In step 12 any desired dyes are added to the resin. Such dyes are known to those skilled in the art and are used for providing color to the resulting foam product, typically brown or green for plant foam products, although other colors could be used as well.

In step 14, the resin is heated to a desired temperature, depending upon the particular foam being targeted. For example, phenol formaldehyde resin would be heated to 60- 80°F for this particular application.

In step 16, a certain amount of the resin/dye mixture would be introduced into a reaction vessel, such as by pumping the resin into the reaction vessel. For the present example, an amount of 100 lbs. of phenol formaldehyde resin is selected and placed into a reaction vessel.

In step 18 a desired amount of cut flower food is added to the resin and is thoroughly mixed with the resin. For example, for cut flowers, the cut flower food comprises dextrose, sucrose, glucose, or other sugars which is to be added to the resin in an amount between 5% and 15% and preferably about 10% (by weight) The cut flower food is mixed with the resin, for example for about 1 minute of mixing, or longer if needed, so that the resin and cut flower food are thoroughly mixed. It is possible to perform step 18 and step 12 simultaneously, for example, by adding the cut flower food to the resin before the resin is added to the reaction vessel. Similarly, the dye could be added after the resin has been placed into the reaction vessel.

Once the cut flower food, any selected dye and resin have been thoroughly mixed, in step 20 a surfactant is added to the mixture as the resin mixture is being stirred. Various types of surfactants are known and generally are composed of a mixture of ionic surfactants.

For 100 Ibs. of resin, approximately 7-15 Ibs. (7-15% by weight) of surfactant should be used, although the amount of surfactant could range from 7 to 15 Ibs. for 100 Ibs. of resin Once all of the surfactant has been completely transferred into the reaction vessel, the mixture should be continued to be stirred or mixed for about an additional 15 seconds.

Then, in step 22 a blowing agent is introduced into the reaction vessel and mixed in with the resin, dye, cut flower food and surfactant mixture. Again, blowing agents are well known and include physical blowing agents (non CFC or HCFC) For the 100 lbs. of resin selected, the amount of blowing agent required would be about 8-15 lbs (8-15% by weight). This blowing agent should be mixed into the resin dye, cut flower food and surfactant mixture for about another 40 seconds.

In step 23 a catalyst is added to the mixture. Such catalysts are known and, catalysis can be either organic or mineral acid based catalysts. For our operation we used an organic acid catalyst. For the 100 lbs. of resin, about 17.0 - 25 Ibs. (17.0 to 25% by weight) of catalyst should be added to the resin, dye, cut flower food, surfactant and blowing agent mixture and the total mixture should then continue to be mixed for an additional 50 seconds.

Upon the conclusion of this mixing, in step 24 the entire contents of the reaction vessel are poured or dumped into a mold. In order to ease the release of the resulting foam product from the mold, a liner, such as a polyethylene bag or film Can be placed into the mold before the mixture is poured into the mold.

In step 26 the mixture is allowed to foam (to rise) and cure which will result in the desired open cell foam product. After curing, we typically get a bun of dimension 4=(l) x 3.5=(w) x 5=(h) (70 cu.ft.). The height of the bun depends on the temperature of resin and weight % of other components added. The buns are allowed to age for 2 days (48 hours) and then cut into The desired shape and size using a water jet cutter.

The resulting foam product, shown at 30 in FIG. 2, will be of an open cell construction with the cut flower food thoroughly mixed within the open cells. The concentration of cut flower food will be accurate for providing sufficient cut flower food to cut flowers when the cut flowers are placed into the open foam product which, in rurn, is held in a liquid impermeable container and filled with water.

Thus, a user wishing to display fresh cut flowers would select a foam block containing cut flower food therein, place the foam block into a liquid impervious container either before or after inserting stems of the cut flowers into the foam block, and introduce water into the container. No separate measuring or mixing of the cut flower food is necessary.

As is apparent from the foregoing specification, the invention is susceptible of being embodied with various alterations and modifications which may differ particularly from those that have been described in the preceding specification and description. It should be understood that I wish to embody within the scope of the patent warranted hereon all such modifications as reasonably and properly come within the scope of my contribution to the art.

## Claims

1. A method for forming an open cell foam product comprising the steps:
selecting a desired resin for forming an open cell foam;
heating said resin 10 a desired temperature for foaming;
admitting a desired amount of said resin to a reaction vessel;
adding a desired amount of cut flower food to said resin and thoroughly mixing the resin and cut flower food;
adding a surfactant to said reaction vessel and mixing said surfactant with said resin/cut flower food mixture:
adding a blowing agent to said reaction vessel and mixing said blowing agent with said resin/cut flower food/surfactant mixture;
adding a catalyst to said reaction vessel and mixing said catalyst with said resin/cut flower food/surfactant/blowing agent mixture;
transferring said resin/cut flower food/surfactant/blowing agent/catalyst mixture to a mold;
allowing said resin/cut flower food/surfactant/blowing agent/catalyst mixture to foam, rise and cure.

2. A method according to claim 1, wherein said desired resin comprises a phenol formaldehyde resin.

3. A method according to claim 2, wherein said heating step comprises heating said resin to a temperature in the range of 60 to 80 degrees F.

4. A method according to claim 1, wherein said cut flower food comprises at least one of dextrose, sucrose and glucose.

5. A method according to claim 1, wherein said surfactant comprises a mixture of ionic surfactants.

6. A method according to claim 1, wherein said blowing agent comprises at least one of the physical blowing agents (non CFC or HCFC=s).

7. A method according to claim 1, wherein said catalyst comprises an organic acid catalyst.

8. A method according to claim 1, including the step of adding a desired dye to said resin prior to adding said surfacrant.

9. A method for forming an open cell foam product comprising the steps:
selecting a phenol formaldehyde resin for forming an open cell foam; heating
said resin to a temperature in the range of 60 to 80 degrees F for foaming;
admitting a desired amount of said resin to a reaction vessel;
adding about 5-15% by weight of a cut flower food to said resin and thoroughly mixing the resin and cut flower food;
adding about 8 to 15% by weight of a surfactant to said reaction vessel and mixing said surfactant with said resin/cut flower food mixture for about 15 seconds;
adding about 7 to 15% by weight of a blowing agent to said reaction vessel and mixing said blowing agent with said resin/cut flower food/surfactant mixture for about 40 seconds;
adding about 17-25% by weight of a catalyst to said reaction vessel and mixing said catalyst with said resin/cut flower food/surfactant/blowing agent mixture for about 50 seconds;
transferring said resin/cut flower food/surfactant/blowing agent/catalyst mixture to a mold;
allowing said resin/cut flower food/surfactant/blowing agent/catalyst mixture to foam, rise and cure

10. A method according to claim 9, wherein said cut flower food comprises at least one of dextrose, sucrose and glucose.

11. A method according to claim 9, wherein said surfactant comprises a mixture of ionic surfactants.

12. A method according to claim 9, wherein said blowing agent comprises at least one of physical blowing agents (non CFC or HCFC=s).

13. A method according to claim 9, wherein said catalyst comprises an organic acid catalyst.

14. A method according to claim 9, including the step of adding a desired dye to said resin prior to adding said surfactant

15. A foam block for receiving cut flowers comprising:
an open cell foam material; and
a cut flower food material comprising a sugar admixed within said open cell foam material.

16. A foam block according to claim 15, wherein said cut flower food matenal comprises about <2% by weight of said foam material.

17. A foam block according to claim 15, wherein said open cell foam material comprises a phenol formaldehyde foam.

18. A foam block for receiving cut flowers comprising an open cell foam material and a cut flower food material comprising a sugar admixed within said open cell foam material wherein said cut flower food material is mixed with a resin for forming said open cell foam material prior to foaming of said resin taking place.

19. A method of displaying cut flowers comprising the steps:
selecting a foam block containing cut flower food therein;
placing said foam block in a water impervious container,
inserting stems of the cut flowers into said foam block; and
introducing water into said container.
